# EUROPEAN PATENT SPECIFICATION

(11) **EP 2 275 307 B1**
(45) Date of publication and mention of the grant of the patent: **19.12.2012**
(21) Application number: 10182792.1
(22) Date of filing: 31.07.2001
(51) Int. Cl.: B60R 13/02, B29C 41/00

(54) **Method for manufacturing a trim part for the interior of an automobile vehicle or at least a skin therefor.**
Verfahren zur Herstellung eines Innenausstattungselements oder -hautelements für ein Kraftfahrzeug
Procédé de fabrication d'élément de garniture intérieure ou peau pour une telle garniture pour un véhicule automobile

(30) Priority: 01.08.2000 EP 00870171
(43) Date of publication of application: 19.01.2011
(62) Divisional of application: 01953704.2
(73) Proprietor: Recticel Automobilsysteme GmbH, 53619 Rheinbreitbach (DE)
(72) Inventor: De Winter, Hugo, 9230, Wetteren (BE); Willems, Jan, 9230, Wetteren (BE)
(74) Representative: Van Reet, Joseph

(56) References cited:
- EP-A1- 0 386 818
- EP-B- 0 642 411
- WO-A-95/32850
- DE-U- 29 503 709
- US-A- 4 810 452

## Description

The invention relates to a method for manufacturing at least a skin of a plastic material, in particular a flexible skin, destined for forming a visible front surface of a trim part arranged to be mounted in particular in an automobile vehicle to form a part of the interior thereof, which trim part comprises at least one pre-manufactured insert showing a back face situated at a distance behind the visible surface formed by said plastic material, in which method the skin is made by applying at least one flowable skin material for producing an elastomeric, non-cellular or micro-cellular plastic skin against at least one surface of a mould and by allowing this flowable skin material to harden to achieve said plastic material. For manufacturing the trim part itself, at least a structural backing layer is united to the back side of the manufactured skin, preferably through the intermediary of an intermediate foam layer.

In the automotive industry, interior trim parts such as dashboards, door panels, covers or other facing panels are getting more and more complex. New car options, such as electronic devices, have to be integrated in a minimum of available space to improve the comfort level and demands of the driver. Even more, the demands from an aesthetic point of view are getting higher as well. New colours, grains, materials are integrated to make the car interior look more attractive.

Another trend is the individualisation of cars. Car drivers want their car to be identified with their personality. They need a higher choice of inserts to create a personal touch in their vehicle. A higher pallet of colours, materials, functions are needed to make a possible customer decide for a specific car. Today, manufacturing processes are limited to a particular amount of versions and options, due to logistics and costs reasons.

Today's manufacturing methods for automotive interior trim parts are usually based on the following concept:
manufacturing an aesthetic visible material (skin or foil) which may be formed of one base layer or of a base layer covered with a paint, in particular with a so-called inmold paint or with a paint applied afterwards onto the skin;
- combining this aesthetic material with a self-supporting carrier or in other words with a structural backing layer either in a one step process, wherein a rigid PU system is for example applied by R-RIM (Reinforced Reaction Injection Moulding) against the back of the skin, or in a two step process, wherein the carrier is pre-manufactured for example by an injection moulding process from rigid ABS and combined, in a second step, with the skin using for example a PU back foaming process;
- die-cut these parts to allow integration of separately pre-manufactured inserts to be assembled in the self-supporting part.

Assembling the pre-manufactured insert in the trim part is a complex job as a high amount of inserts or tools, wires, etc. have to be mounted resulting in high production costs. Moreover, the different inserts of a wide range of materials have to fit perfectly into the holes cut in the part. Deviations in size of holes and/or inserts result in poor visual quality, which may be the result of the large temperature fluctuations which may occur in the car (from -35°C to +130°C) or of tolerances of die cut processes of parts.

Another problem of inserts which are mounted into trim parts is that they may be at the origin of annoying squeaking noises when the vehicle drives for example over a bumpy road. These squeaking noises are the result of vibrations of the insert relative to the skin or other layers of the trim part and of the rubbing action caused thereby. In view of the high quality demands, these squeaking noises are an important problem in the automotive industry and are often very difficult to avoid.

An object of the present invention is therefore to provide a method for manufacturing a trim part for an automobile vehicle's interior and a skin therefor which allows to integrate the inserts easier in the trim part.

To this end, the method according to the invention is **characterised in that** said pre-manufactured insert is positioned in said mould and is adhesively fixed to said plastic material, in particular at least partially by the adhesion of said flowable skin material itself, before it has completely hardened, according to claim 1.

For integrating the pre-manufactured inserts in the trim part, they do no longer have to be assembled in holes in the trim part itself but they can be fixed to the skin when making this skin without having to die-cut holes therein. Fixing the insert to the skin can be done in the method according to the invention in accordance with different embodiments.

In the embodiment, the insert shows a front face and, is maintained with its front face at a distance from the mould surface against which the skin is moulded by applying, before positioning the pre-manufactured insert into the mould, a first layer of the flowable skin material against the mould surface and by positioning the insert onto this first layer, preferable before this layer of flowable skin material has completely hardened so as to adhere the insert to this layer.

In the embodiment, the first layer of flowable skin material, preferably a reactive polyurethane mixture, is preferably sprayed, in an open mould, against the mould surface. Just after the spraying, the insert can easily be positioned onto the back of this spray layer.

In the embodiment of the method according to the invention, use is preferably made as said flowable skin material of a reactive mixture for obtaining an elastomeric, non-cellular or micro-cellular polyurethane skin. An advantage of the use of a reactive mixture is for each of the different application methods (spraying, pouring or injecting) that tool pressures and tool temperatures are relatively low so that there is substantially no risk of damaging the appearance or characteristics of the integrated inserts, whether these inserts are mechanical, aesthetic and/or functional or electronic inserts.

The document EPO 386 818 A1 forms the closest prior art and discloses a method for manufacturing a trim part comprising at least a flexible skin of a plastic material forming a visible front surface of the trim part, a structural backing layer united to a back side of the flexible skin and at least one pre-manufactured insert showing a front face and a back face which is situated at a distance behind the visible surface formed by said plastic material, in which method the skin is made by applying at least one flowable skin material comprising a reactive mixture for producing an elastomeric, non-cellular or micro-cellular polyurethane skin against at least one surface of a mould and by allowing this flowable skin material to harden to achieve said plastic material, and said structural backing layer is united to the back side of the flexible skin to render the trim part self-supporting, whereby said pre-manufactured insert is positioned in said mould and is maintained with its front face at a distance from the mould surface against which the skin is moulded by applying, before positioning said pre-manufactured insert into the mould 1, a first layer of said flowable skin material against said mould surface and by positioning said insert onto this first layer.

The present invention also relates to a method of manufacturing a skin, in particular a flexible skin, for forming a visible front surface of a trim part arranged to be mounted in particular in an automobile vehicle to form a part of the interior thereof, which skin is made of an elastomeric, non-cellular or micro-cellular plastic material, in particular in accordance with the method according to the invention and is **characterised in that** it comprises at least one pre-manufactured insert which is adhesively fixed to the plastic material of the skin and which shows a back face situated at a distance behind said visible surface.

Other particularities and advantages of the invention will become apparent from the following description of some particular embodiments of the method according to the present invention.
Figure 1 shows schematic cross sectional views through a mould illustrating the successive steps of a method for moulding a trim part for an automobile vehicle's interior, in particular a dashboard;
Figure 2 shows an enlarged view of detail II in Figure 1 being an aesthetic insert abutting an upstanding edge provided on the mould surface and having a back partially covered with the polyurethane material of the skin;
Figure 3 shows an enlarged view of detail III in Figure 1 being an aesthetic insert abutting on only one side an upstanding edge provided on the mould surface and having a back which is entirely covered with the polyurethane material of the skin;
Figures 4 and 5 illustrate decorative frames inserted in the gaps around the inserts;
Figures 6 to 8 show enlarged views similar to the view of Figure 2;
Figures 9 to 12 illustrate different flexible lips on the inserts;
Figure 13 shows an enlarged view similar to the view of Figure 2 but illustrating the integration of a functional mechanical insert in the trim part, more particularly a ventilation housing, and having the foam backing layer and the structural backing layer or carrier applied thereto as illustrated in Figure 1;
Figure 14 shows the ventilation housing of Figure 13 integrated in the trim part removed from the mould and having its back die-cut to provide a hole through which adjustable ventilation blades are mounted in the lid;
Figure 15 shows an enlarged view similar to the view of Figure 13 but illustrating the integration of a functional electronic insert in the trim part comprising for example an electronic PLC device and switches and LEDs;
Figure 16 shows an enlarged view similar to the view of Figure 13 but illustrating the integration of a mechanical connector formed by a threaded ring in the trim part;
Figure 17 shows the mechanical connector of Figure 16 integrated in the trim part removed from the mould and having a finishing element assembled in the recess formed in front of the mechanical connector in the trim part;
Figure 18 shows an alternative embodiment of the mechanical connector illustrated in Figure 17;
Figure 19 shows a view similar to the view of Figure 16 but showing the integration of an insert with a mechanical and an electric connector;
Figure 20, which illustrates the embodiment of the invention, shows an enlarged view similar to the view of Figure 2 but illustrating the integration of an electric switch and other parts of an electronic or electric circuit within the skin.

The invention generally relates to a method for manufacturing a trim part 1 for an automobile vehicle's interior, in particular interior trim parts such as dashboards, doorpanels, consoles, glove compartments, etc. or at least a skin 2 therefor which forms the visible front surface 3 of such trim parts 1 or panels. In addition to the skin 2, the trim part 1 comprises at least a structural backing layer 4 or rigid carrier united to the back side of the skin 2, usually through the intermediary of an intermediate foam layer 5. In the method according to the invention, at least one pre-manufactured insert 6 is further integrated in the trim part 1. This insert 6 may be composed of an aesthetic, a functional or an electronic element. An essential feature of the invention is that the insert 6 shows a back face 7 situated at a distance behind the visual front surface 3 formed by the skin 2 or, in other words, that the insert 6 is not simply applied, for example adhered, with its back face 7 onto the front surface 3 of the skin 2 like in US-A-4 810 452.

The skin 2, which is preferably a flexible skin, is made by applying at least one flowable skin material for producing an elastomeric, non-cellular or micro-cellular plastic skin against at least one surface 8 of a mould 9. The skin has normally an average thickness in the range of 0.1 to 3 mm and usually in the range of 0.5 to 1.5 mm whilst its density is usually higher than 400 kg/m³ and preferably higher than 700 kg/m³ due to the fact that the skin is non-cellular or micro-cellular. For determining the average thickness of the skin or other layers, the volume and the surface area of the skin are measured and the volume is divided by the surface area. The flowable skin material may be a molten thermoplastic material, in particular TPE's (= thermoplastic elastomers) such as TPO, PVC, EV, ... In accordance with the present invention, preference is however given to the use of a reactive mixture for obtaining an elastomeric, non-cellular or micro-cellular polyurethane material. An advantage of the use of a reactive mixture is that tool pressures and tool temperatures can be kept relatively low so that there is substantially no risk of damaging the appearance or characteristics of the integrated inserts. In the further detailed description, reference will be made only to the use of such a reactive mixture but for a person skilled in the art, it will be clear that the skin can also be made from thermoplastic materials and this in accordance with the existing moulding techniques for such materials

In the preferred embodiment, the reactive polyurethane mixture can either be applied by a spray process against the surface 8 of an open mould or it can be applied in a closed mould, more particularly poured but preferably injected in accordance with a reaction injection moulding (RIM) process. The spray, the pouring and the RIM processes are known per se so that they need not be described into further detail. For the spray process, reference can moreover be made to the technique described in European patent EP-B-0 303 305.

As reactive polyurethane mixture, use can be made of a light-stable, mass-stained coloured polyurethane reaction mixture as disclosed for example in European patent EP-B-0 379 246 for a spray process and in WO98/14492 for a reaction injection moulding process.

In a variant embodiment, a finishing layer, in particular a light-stable polyurethane paint or in other words a so-called PU inmold paint that may be either water based or solvent based, can be applied first against the mould surface. This paint composes together with the elastomeric layer applied thereto subsequently, the skin 2. In this embodiment, the elastomeric layer does not necessarily have to be light stable so that use can be made of an aromatic polyurethane system for this layer.

The structural backing layer 4 or carrier which is applied against the back of the skin 2 can be made of various materials such as PVC, ABS, SMA, PU, etc. which provide the necessary strength to the trim part 1 in order to render it self-supporting. The backing layer 4 can be formed in situ, by a one step process, against the back the skin 2, in particular starting from a rigid PU system applied by an S-RIM (Structural RIM) or an R-RIM (Reinforced RIM) process in a closed mould or by a spray technique in an open mould as disclosed for example in European patent EP-B-0 642 411. Optionally, a polyurethane foam system can first be applied against the back of the skin 2 to form an intermediate foam layer 5 in order to improve the touch comfort of the panel (see also EP-B-0 642 411).

The structural backing layer 4 can also be applied in a two step process against the back of the skin 2. In such a process, the backing layer 4 is for example first moulded in accordance with an injection or a reaction injection process. In the second step, it may then for example be glued directly to the back of the skin 2. In order to improve the soft touch of the trim part 1, it is however usually united to the back of the skin through the intermediary of an intermediate foam layer 5 which is formed in situ between the skin 2 and the structural backing layer 4. The reactive polyurethane or other mixture for such a foam can either be poured onto the skin 2 just before applying the rigid backing layer 4 thereto or can be injected between the skin 2 and the backing layer 4.

A characterising feature of the method according to the invention is the way wherein the pre-manufactured insert or inserts 6 are integrated in the trim part 1. These inserts 6 are more particularly adhesively fixed to the plastic material of the skin, preferably at least partially by the adhesion of said flowable skin material itself, before it has completely hardened or in other words before the reactive mixture is completely cured. Since the insert is fixed to the skin layer, the skin 2 remains dimensionally stable around the insert so that a qualitative transition can be obtained whilst squeaking noises can also be avoided by this fixation. Moreover, no further assembling steps are required to mount the insert in the trim part. However, this does not preclude the subsequent mounting of other elements onto the trim part or onto the inserts integrated therein by the process according to the invention.

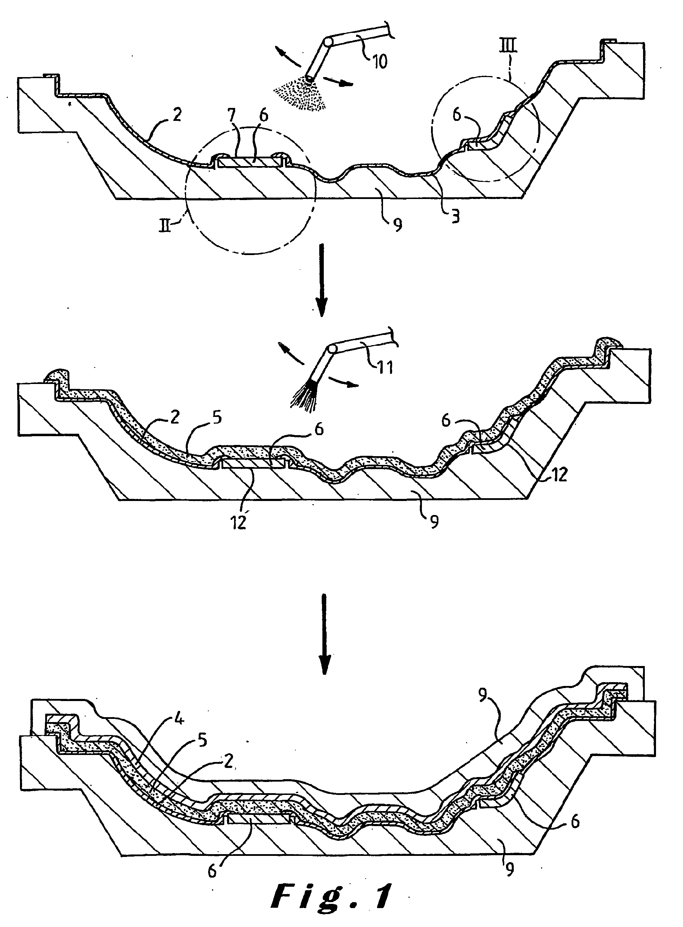

Figure 1 illustrates schematically one way wherein a method can be carried out for manufacturing a trim part 1 for an automobile vehicle's interior, more particularly a dashboard. In this embodiment, the pre-manufactured insert or inserts 6 are fixed to the skin 2 by positioning them against the mould surface 8 and by applying the reactive mixture for the skin 2 subsequently against this mould surface 8 and against at least one side of the inserts 6 in a layer extending at least partially over the mould surface 8 and over said side of the inserts 6.

In the method of Figure 1, use is made of a two-part mould 9. Before positioning the inserts 6 therein, a mould release agent and/or an inmold coating can optionally first be sprayed in the mould 9. In the illustrated method, the inserts 6 are positioned against the mould surface 8 of the lower mould part. Subsequently, a reactive polyurethane mixture is sprayed by means of a spray gun 10 in a layer extending over the mould surface 8 and at least partially also over the back faces 7 of the inserts 6.

In a second step, a reaction mixture for obtaining a polyurethane foam layer 5 is poured by means of a pouring nozzle or mixing head 11 onto the back of the polyurethane skin 2, preferably when the skin 2 is still somewhat sticky. In case of undercuts, the skin made in the first step should be transferred to a second mould, the lower mould part of which consists of two or more parts allowing to demould the trim part.

Then, in a third step, the uppermost part of the mould 9 having a pre-manufactured structural backing layer 4 attached thereto is closed and the skin and the intermediate foam layer are allowed to cure before demoulding the thus obtained trim part 1. In this method, the structural backing layer 4 may be made in particular of a thermoplastic material such as for example ABS or SMA (styrene maleic anhydride) which can be injected in a separate injection mould. Of course, it is also possible to make the structural backing layer for example of a reactive polyurethane or polyisocyanurate mixture.

Instead of pouring the foam material in the mould 9 before closing it, this foam material can also be injected, after having closed the mould 9, between the skin 2 and the structural backing layer 4.

In a further variant the reactive mixture for obtaining the polyurethane foam layer 5 can be sprayed in the second step by means of a spray gun onto the back of the polyurethane skin 2. When the intermediate foam layer 5 has thus been formed, the mould is closed and a suitable reaction mixture, for example a polyurethane or a polyisocyanurate reaction mixture, for obtaining the rigid structural backing layer 4 can then be injected into the mould cavity by means of a third spray gun.

The inserts 6 illustrated in Figure 1 are intended to remain visible on the final trim part 1 in the car and show more particularly a front face 12 which is left uncovered to form part of the visible surface 3 of the trim part 1. They can be made of aesthetic materials varying from relatively soft to hard such as leather, fabrics, foams, etc. or wood, metal, plastic parts such as ABS (acrylbutadiene styrene), PC (polycarbonate) or even transparent or decorative materials. They can also be masked.

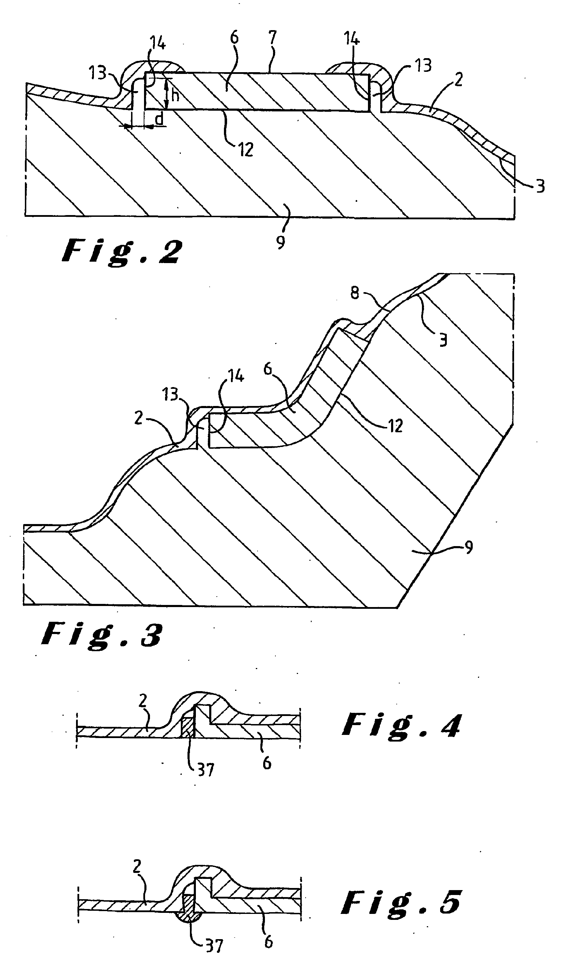

In order to achieve a nicely finished transition on the visible front side of the trim part 1 between the polyurethane material of the skin 2 and the edges of the aesthetic inserts 6, the mould surface 8 is provided with upstanding edges 13 and the inserts 6 are positioned with their lateral sides 14 in abutment against these upstanding edges 13. Figure 2 shows on a larger scale the abutment of one of the inserts with its lateral sides 14 against the upstanding edges 13. In case the visual aspect is a particular area is less important as for the second insert of Figure 1, shown on a larger scale in Figure 3, a lower upstanding edge or even no edge at all may be used.

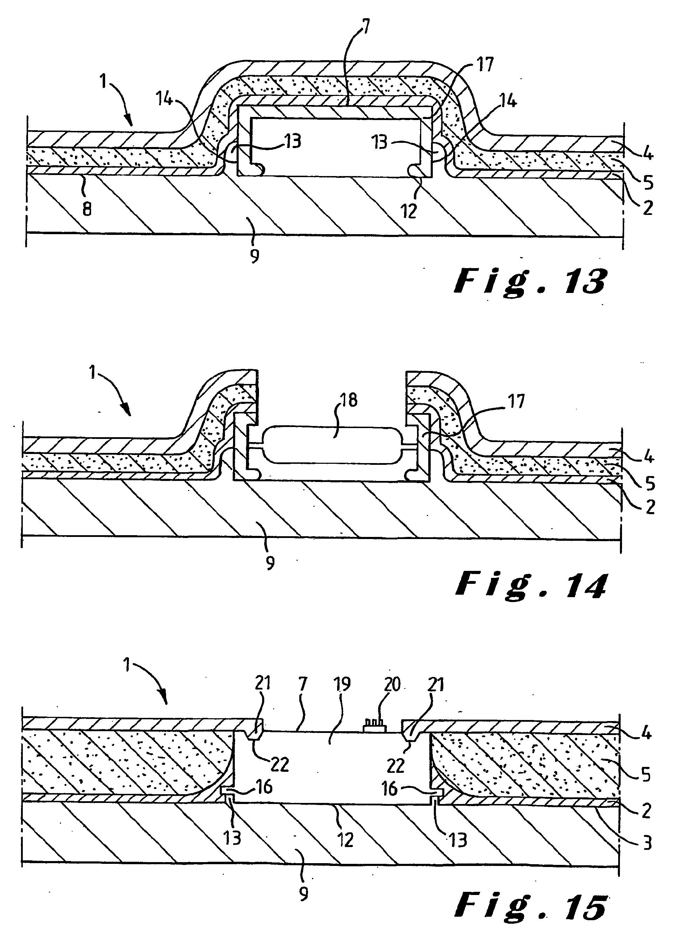

In case the visual aspect is important, the upstanding edge or ridge 13 has preferably a base showing a thickness d of between 0.1 and 5 mm and more preferably of between 0.25 and 1 mm. The thickness of this base determines indeed the width of the gap between the elastomeric skin layer and the insert in the final part, optionally with radius, as illustrated for example in Figures 13 and 14, when aesthetically demanded. For aesthetic reasons, it may sometimes be desirable to withdraw the gap from view. This can however easily be achieved by pressing a decorative frame 37, having for example a chrome or a wood look, into the gap. In the insert illustrated in Figure 4, the decorative frame 37 has the same width as the gap and provides thus a narrow edge around the insert. Figure 5 illustrates another insert wherein the frame 37 shows a decorative head portion which partially covers the adjoining edges of the insert and the skin material. In this embodiment, the frame shows a dovetail to clamp the frame more strongly into the gap.

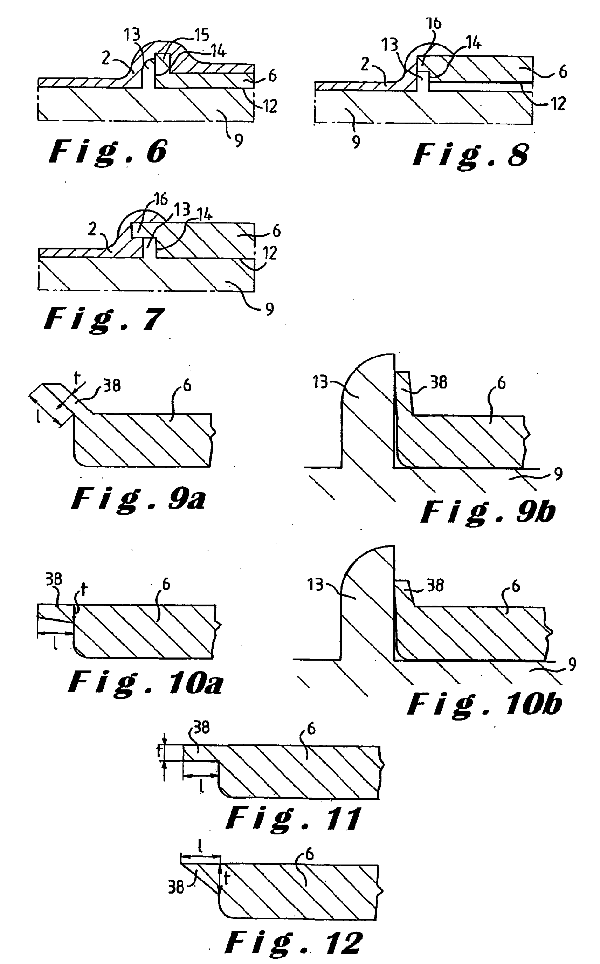

When the insert remains visible, penetration of reactive mixture for the skin between the upstanding edges 13 and the lateral sides of the inserts 6 down to the front face 12 of the inserts is preferably to be avoided. By oversize between the upstanding edges and the insert, a slight pressure will create a sealing for the spray. The upstanding edges 13 have in particular a height h of at least 0.5 mm, preferably a height h of at least 1 mm and most preferably a height h of at least 2 mm. Depending on the viscosity of the reactive mixture, the pressure at which the insert abuts the upstanding edges, etc. soiling of the front face of the inserts by penetrating reactive mixture can thus be avoided. In case the insert itself has a too small thickness, the height over which it abuts against the upstanding edge can, if necessary be increased by applying a (foam) backing layer against the back of the insert and/or its peripheral edges can be provided with flanges 15 as shown in Figure 6.

As illustrated in Figure 7 the insert 6 can further be provided with a lateral projection 16 by means of which the insert is positioned on top of the upstanding edge 13 so that the projection 16 projects over the upstanding edge 13. Especially when the reactive mixture for the skin 2 is sprayed against the mould surface 8, the shielding effect provided by the lateral projection 16 also contributes in preventing the reactive mixture from penetrating between the insert 6 and the upstanding edge 13. On the other hand, as illustrated in Figure 8, the lateral projection 16 can also be used to suspend the insert 6 onto the upstanding edge 13 so that its front face 12 is maintained at a distance behind the mould surface 8 against which the skin is moulded and so that its front face 12 is on other words recessed within the visible surface formed by the elastomeric skin layer 2. In the previously described methods, the inserts 6 were on the contrary positioned with their a front faces 12 substantially flush to the mould surface 8 against which the skin 2 is moulded so that at the location of the inserts a nice continuous visible surface was obtained. In some cases, preference can however also be given to positioning the inserts into a small recess in the mould surface so that they project somewhat out of the visible surface of the trim part.

In Figures 9 to 12 additional inserts are illustrated wherein an improved sealing between insert 6 and upstanding edge 13 is achieved by means of a flexible lip 38. In Figure 9a, the lip 38 projects obliquely upwards from the top of the lateral side of the insert 6 and is pushed further upwards when positioning the insert against the upstanding edge. In this way, an effective seal is formed as illustrated in Figure 9b. A further variation of the lip is illustrated in Figures 10a and 10b showing the lip respectively in its undeformed and in its deformed state. Figures 11 and 12 illustrate some further possible shapes of the lip 38. In general both the thickness t and the length I of the lips indicated in the figures will usually be comprised between 0.2 and 5 mm.

The inserts 6 integrated in the skin 2 may not only have an aesthetic function but may also have a functional function. An example thereof is illustrated in Figures 13 and 14. In this example, a ventilation housing 17 positioned between upstanding edges 13 against the mould surface 8 so that a nicely finished transition is obtained between the elastomeric skin layer 2 and the decorative, chrome-like front face 12 of the insert 17. This insert 17 has a closed back face 7 so that its back may be entirely covered with the elastomeric material of the skin 2, the foam layer 5 and the structural backing layer 4. As shown in Figure 14, the back side of the insert 17 can subsequently be opened by die-cutting the different superimposed layers. In this way, not only air can be blown through the ventilation housing but adjustable blades 18 for controlling the direction of the air flow and/or for closing the ventilation opening can be mounted from the back side within the ventilation housing 17. Alternatively, the blades can already be included during positioning of the insert.

A further example of a functional insert 6 is illustrated in Figure 15. In this embodiment a PLC device 19 (Programmable Logic Control) provided with lateral projecting flanges 16 is positioned with these flanges on top of the upstanding edges 13. At its visible front face, the PLC device may show for example several LEDs and switches whilst at its back face, it comprises for example an electrical connector 20. The PLC device has such a large thickness, that spraying of the reactive mixture for the skin 2 can be limited to its lateral sides. For preventing the foam material of the intermediate foam layer 5 from covering the back and thus in particular the electrical connector 20 of the PLC device, the pre-manufactured structural layer 4 is provided with a hole surrounded by a downward flange 21 which fits into a groove 22 in the back of the PLC device. In a variant embodiment, only the PLC housing can be integrated first in the trim part, the PLC device itself can then be easily mounted afterwards in this housing.

In the previously described methods, the pre-manufactured inserts 6 showed a front face 12 which is left uncovered to form part of the visible surface of the trim part 1. An insert 6 may at least partially be hidden from view by fixing a finishing element thereto so as to cover the insert 6. In this case, the insert 6 is preferably maintained with its front face 12 at a distance behind the mould surface 8 against which the skin 2 is moulded so that its front face 12 is recessed within the visible surface 3 formed by the skin 2. The reactive mixture for the skin layer 2 is prevented from entirely covering the front face 12 of the insert 6, in particular by positioning the insert 6 onto an upstanding edge 13 or onto a raised portion 23 of the mould surface, so that the skin 2 forms a recess 24 in front of the insert 6.

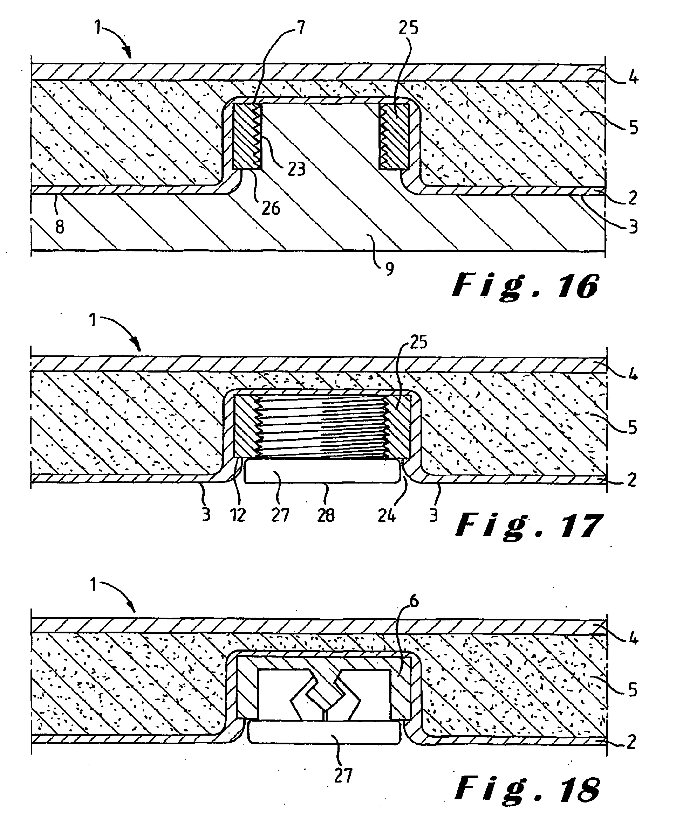

Such an insert is illustrated in Figure 16. Here, the insert 6 consists of an internally threaded ring 25 which is positioned onto a shoulder 26 of a raised portion 23 of the mould surface 8. The central part of this raised portion extends up to the upper edge of the ring 25 and prevents the reactive mixture for the skin to enter the ring 25. As shown in Figure 17, when the trim part has been demoulded, a decorative finishing element 27 can be screwed in the threaded ring insert 25, preferably until a decorative front face 28 of this finishing element 27 is substantially flush to the visible surface 3 formed by the skin 2. In this case also, a nicely finished qualitative transition can be obtained between the front face of the finishing element and the visible surface of the moulded, elastomeric skin layer 2.

Instead of a screw thread, use could also be made of a bayonet closure, a snap-fit connection or any other quick coupling system for fixing the finishing element 27 to the integrated insert 6. The ring could further only provide a guiding housing wherein the finishing element is inserted and fixed on the back of the trim part by a separate fixing element. In this insert, a set of different interchangeable finishing elements 27 are preferably provided for being fixed to or through the insert or inserts. An advantage of this insert is that a lot of individualisation possibilities can rather easily be offered since the finishing elements can be mounted at the end of the car manufacturing process or even later, for example when the car is already with the salesman or in use. Figure 18 illustrates a possible snap-fit connection between the insert 6 and the finishing piece 27. In practice, a similar snap-fit connection is already used between the structural backing layer 4 and a finishing piece. By this method, the insert is however more accurately positioned with respect to the visible front surface 3 of the skin 2 so that a higher quality transition is obtained between the front face 28 of the finishing element and the front surface 3 of the skin.

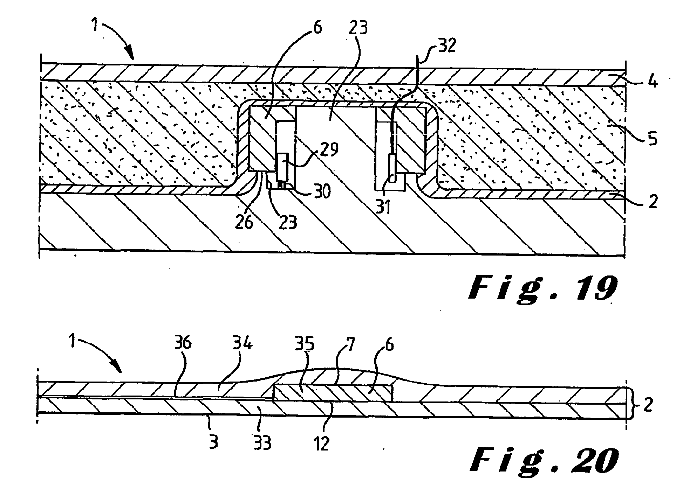

The finishing element 27 may not only have an aesthetic function but could also be formed by a functional, in particular an electronic element. A possible insert for such an element is illustrated in Figure 19. This insert has a shape similar to the ring of Figure 16 but is provided with a chip 29 with connector pins 30 and with a further electrical connector pin 31 connected to an electrical wire 32. The finishing element, comprising for examples LEDs and switches or buttons, can be fixed to this insert by a snap-fit connection. In a variant , an electric or electronic compound could for example also be screwed or snapped in the insert illustrated in Figures 17 and 18 respectively. In that case, the electrical wire or wires could be guided through a hole made through the structural backing layer 4 behind the insert 6.

According to the invention, the insert 6 is not positioned against the mould surface 8 but it is maintained with its front face 12 at a distance from the mould surface 8 against which the skin 2 is moulded so that the front face of the insert 6 is covered by the reactive mixture of the skin. This could be done for example by fixing the insert to the upper part of a two part mould and by injecting or pouring the reactive mixture between the mould surface of the opposite mould part and the front face of the insert.

In the invention, a first layer 33 of the reactive mixture for the skin 2 is applied against the mould surface 8 and the insert is positioned onto this first layer 33. Use can be made of an a separate adhesive to fix the insert to the first layer 33. The insert is however preferably positioned onto this layer of reactive mixture before it is completely cured so as to adhere the insert 6 to this layer 33. This can quickly be done by a robot since no separate adhesive has first to be applied because, in this case, the insert is also adhesively fixed by the reactive mixture of the skin to the skin.

In accordance with the method according to the present invention and as illustrated in Figure 20, a second layer 34 of a further reactive mixture for obtaining an elastomeric, non-cellular or micro-cellular polyurethane material, which may be the same as or different from the reactive mixture used for said first layer 33, is applied, after having positioned the pre-manufactured insert 6 onto the first layer 33, against the back of the first layer 33 and against at least one side of the insert 6. In this way, the insert 6 is not only adhesively bonded to the skin 2 by the reactive material of the first layer 33 but also by the reactive material of the second layer 34. In the case of relatively thin inserts 6, the second layer 34 of the further reactive mixture may also be applied against the back face of the insert 6 so that it will be entirely encapsulated in the skin 2. The second layer 34 of the further reactive mixture is preferably applied before the first layer 33 of elastomeric material is completely cured so that a good adhesion is obtained between both layers without requiring the use of a primer.

In the above described embodiments wherein the front face of the insert 6 is covered by the elastomeric skin layer, the insert is preferably an electronic circuit or a part therefor and comprises in particular an element selected from the group consisting of an electronic print plate, preferably a flexible print plate, electric wiring preferably provided on a flexible print plate, an electric push button, a readable electronic code, a detector, a chip, micro-electronic elements, integrated intelligence elements, smart cart technology elements, conductive fibres, interfaces and antennas, car detection system elements or a combination of these elements. The insert illustrated in Figure 20 comprises for example an electrical switch 35 connected to electric wiring provided on a thin, flexible print plate 36 extending within the skin, between the two layers thereof.

When the insert provides a readable electronic code enabling to identify the car or even to locate it when it has been stolen, an advantage of the above described method is that the coding device can be positioned randomly by the robot onto the first layer so that it cannot easily be removed by a thief since he does not know where the coding device is exactly situated.

## Claims

1. A method for manufacturing a trim part (1) comprising at least a flexible skin (2) of a plastic material forming a visible front surface (3) of the trim part (1), a structural backing layer (4) united to a back side of the flexible skin (2) and at least one pre-manufactured insert (6) showing a front face (12) and a back face (7) which is situated at a distance behind the visible surface (3) formed by said plastic material, in which method the skin (2) is made by applying at least one flowable skin material comprising a reactive mixture for producing an elastomeric, non-cellular or micro-cellular polyurethane skin (2) against at least one surface (8) of a mould (9) and by allowing this flowable skin material to harden to achieve said plastic material, and said structural backing layer (4) is united to the back side of the flexible skin (2) to render the trim part (1) self-supporting, whereby said pre-manufactured insert (6) is positioned in said mould (9) and is maintained with its front face (12) at a distance from the mould surface (8) against which the skin (2) is moulded by applying, before positioning said pre-manufactured insert (6) into the mould (9), a first layer (33) of said flowable skin material against said mould surface (8) and by positioning said insert (6) onto this first layer (33), **characterised in that** after having positioned the pre-manufactured insert (6) onto the first layer (33) of said reactive mixture, a second layer (34) of a further flowable skin material, comprising a further reactive mixture producing an elastomeric, non-cellular or micro-cellular polyurethane skin (2), which may be the same as or different from the flowable skin material used for said first layer (33), being applied against a back side of said first layer (33) and against at least one side of the insert (6) so that the insert is adhesively fixed to said plastic material.

2. A method according to claim 1, **characterised in that** said structural backing layer (4) is united to the back side of the manufactured skin (2) through the intermediary of an intermediate foam layer (5).

3. A method according to claim 1 or 2, **characterised in that** the insert (6) is positioned onto said first layer (33) of flowable skin material before this layer (33) of flowable skin material has completely hardened so as to adhere the insert (6) to this layer (33).

4. A method according to any one of the claims 1 to 3, **characterised in that** said pre-manufactured insert (6) is an electronic circuit or a part therefor.

5. A method according to claim 4, **characterised in that** said pre-manufactured insert (6) comprises an element selected from the group consisting of an electronic print plate (36), electric wiring, an electric push button (35), a readable electronic code, a detector, a chip, micro-electronic elements, integrated intelligence elements, smart cart technology elements, conductive fibres, interfaces and antennas, car detection system elements or a combination of these elements.

6. A method according to claim 5, **characterised in that** said pre-manufactured insert (6) comprises a flexible print plate (36).

7. A method according to any one of the claims 1 to 6, **characterised in that** said flowable skin material is applied by spraying against the mould surface (8).

8. A method according to any one of the claims 1 to 7, **characterised in that** said flowable skin material is applied against the mould surface (8) by using a closed mould and by filling this closed mould with said flowable skin material either by a pouring or an injecting moulding process, more particularly a reaction injection moulding process.

9. A method according to any one of the claims 1 to 8, **characterised in that** said skin (2) is made by applying first a finishing layer against said mould surface, in particular an inmold paint, and subsequently said flowable skin material.

10. A method according to any one of the claims 1 to 9, **characterised in that** said flexible skin (2) has an average thickness in the range of 0.1 to 3 mm.

11. A method according to any one of the claims 1 to 10, **characterised in that** said further flowable skin material is applied against the back face (7) of the insert (6).

## Patentansprüche

1. Ein Verfahren zur Herstellung eines Innenausstattungselements (1), das zumindest eine flexible Haut (2) aus einem Kunststoffmaterial, welche eine sichtbare Vorderseite (3) des Innenausstattungselements (1) formt, eine strukturelle Rückenschicht (4) verbunden mit einer Rückseite der flexiblen Haut (2) und zumindest einen vorgefertigten Einsatz (6) mit einer Vorderseite (12) und einer Rückseite (7), gelegen in einem Abstand hinter der sichtbaren Oberfläche (3), welche durch das erwähnte Kunststoffmaterial geformt ist, umfasst, wobei in diesem Verfahren die Haut (2) durch Aufbringung von zumindest einem fließfähigen Beschichtungsmaterial, das eine Reaktionsmischung zur Herstellung einer elastomeren, nicht-zellularen oder mikrozellularen Polyurethanhaut (2) gegen zumindest eine Oberfläche (8) eines Formstücks (9) umfasst, und durch Aushärten dieses fließfähigen Beschichtungsmaterials, um das erwähnte Kunststoffmaterial zu erhalten, hergestellt wird, und die erwähnte strukturelle Rückenschicht (4) mit der Rückseite der flexiblen Haut (2) verbunden wird, um das Innenausstattungselement (1) selbsttragend zu machen, wobei der erwähnte vorgefertigte Einsatz (6) in das erwähnte Formstück (9) eingelegt und mit seiner Vorderseite (12) in einem Abstand von der Formstückoberfläche (8) gehalten wird, gegen die die Haut (2) durch Auftragen, vor dem Einlegen des erwähnten vorgefertigten Einsatzes (6) in das Formstück (9), einer ersten Schicht (33) des erwähnten fließfähigen Beschichtungsmaterials auf die erwähnte Formstückoberfläche (8) und durch Einlegen des erwähnten Einsatzes (6) auf diese erste Schicht (33) geformt wird, **dadurch gekennzeichnet, dass**, nach Positionierung des vorgefertigten Einsatzes (6) auf die erste Schicht (33) der erwähnten Reaktionsmischung, eine zweite Schicht (34) eines weiteren fließfähigen Beschichtungsmaterials, welches eine weitere Reaktionsmischung umfasst, die eine elastomere, nicht-zellulare oder mikrozellulare Polyurethanhaut (2) herstellt, die gleich wie oder anders als das für die erste Schicht (33) verwendete fließfähige Beschichtungsmaterial sein kann, gegen eine Rückseite der erwähnten ersten Schicht (33) und gegen zumindest eine Seite des Einsatzes (6) aufgetragen wird, sodass der Einsatz anhaftend am erwähnten Kunststoffmaterial befestigt ist.

2. Ein Verfahren nach Anspruch 1, **dadurch gekennzeichnet, dass** die erwähnte strukturelle Rückenschicht (4) mittels einer Zwischenschaumschicht (5) mit einer Rückseite der hergestellten Haut (2) verbunden wird.

3. Ein Verfahren nach Anspruch 1 oder 2, **dadurch gekennzeichnet, dass** der Einsatz (6) auf die erwähnte erste Schicht (33) aus fließfähigem Beschichtungsmaterial positioniert wird, bevor diese Schicht (33) aus fließfähigem Beschichtungsmaterial völlig ausgehärtet ist, sodass der Einsatz (6) an dieser Schicht (33) haftet.

4. Ein Verfahren nach irgendeinem der Ansprüche 1 bis 3, **dadurch gekennzeichnet, dass** der erwähnte vorgefertigte Einsatz (6) ein elektronischer Kreislauf oder ein Teil dafür ist.

5. Ein Verfahren nach Anspruch 4, **dadurch gekennzeichnet, dass** der erwähnte vorgefertigte Einsatz (6) ein Element umfasst, das aus der Gruppe bestehend aus einer elektronischen Leiterplatte (36), elektrischer Verdrahtung, einer elektrischen Drucktaste (35), einem lesbaren elektronischen Code, einem Detektor, einem Chip, mikroelektronischen Elementen, leitfähigen Fasern, Schnittstellen und Antennen, Elementen von Fahrzeugerfassungssystemen oder einer Kombination dieser Elemente ausgewählt wurde.

6. E in Verfahren nach Anspruch 5, **dadurch gekennzeichnet, dass** der erwähnte vorgefertigte Einsatz (6) eine flexible Leiterplatte (36) umfasst.

7. Ein Verfahren nach irgendeinem der Ansprüche 1 bis 6, **dadurch gekennzeichnet, dass** das erwähnte fließfähige Beschichtungsmaterial durch Sprühen auf die Formstückoberfläche (8) aufgetragen wird.

8. Ein Verfahren nach irgendeinem der Ansprüche 1 bis 7, **dadurch gekennzeichnet, dass** das erwähnte fließfähige Beschichtungsmaterial auf die Formstückoberfläche (8) aufgetragen wird, indem ein geschlossenes Formstück verwendet wird und dieses geschlossene Formstück durch ein Guss- oder Einspritzverfahren, genauer ein Reaktionsgießverfahren, mit dem erwähnten fließfähigen Beschichtungsmaterial gefüllt wird.

9. Ein Verfahren nach irgendeinem der Ansprüche 1 bis 8, **dadurch gekennzeichnet, dass** die erwähnte Haut (2) hergestellt wird, indem zuerst eine Oberflächenschicht auf die erwähnte Formstückoberfläche aufgetragen wird, insbesondere eine In-Mould-Farbe, und danach das erwähnte fließfähige Beschichtungsmaterial.

10. Ein Verfahren nach irgendeinem der Ansprüche 1 bis 9, **dadurch gekennzeichnet, dass** die erwähnte flexible Haut (2) eine durchschnittliche Dicke im Bereich von 0,1 bis 3 mm hat.

11. Ein Verfahren nach irgendeinem der Ansprüche 1 bis 10, **dadurch gekennzeichnet, dass** das erwähnte weitere fließfähige Beschichtungsmaterial auf die Rückseite (7) des Einsatzes (6) aufgetragen wird.

## Revendications

1. Procédé pour fabriquer une pièce de garniture (1) comprenant au moins une peau (2) flexible en une matière plastique formant une surface frontale visible (3) de la pièce de garniture (1), une couche structurale de support (4) unie à un côté arrière de la peau flexible (2) et au moins un insert préfabriqué (6) présentant une face avant (12) et une face arrière (7) qui est situé à une distance derrière la face visible (3) formée par ladite matière plastique, dans lequel procédé la peau (2) est réalisée en appliquant au moins un matériau de peau fluide comprenant un mélange réactionnel pour produire une peau (2) de polyuréthane élastomère, non cellulaire ou microcellulaire contre au moins une surface (8) d'un moule (9) et en laissant le matériau de peau fluide durcir pour obtenir ladite matière plastique, et ladite couche de support structurale (4) est unie au côté arrière de la peau flexible (2) pour rendre la pièce de garniture (1) autoportante, ledit insert préfabriqué (6) étant positionné dans ledit moule (9) et maintenu avec sa face avant (12) à une distance de la surface (8) du moule contre laquelle la peau (2) est moulée en appliquant, avant de positionner ledit insert préfabriqué (6) dans le moule (9), une première couche (33) dudit matériau de peau fluide contre ladite surface (8) de moule et en positionnant ledit insert (6) sur cette première couche (33), **caractérisé en ce qu'**après avoir positionné l'insert préfabriqué (6) sur la première couche (33) dudit mélange réactionnel, une deuxième couche (34) d'un autre matériau de peau fluide, comprenant un autre mélange réactionnel produisant une peau (2) de polyuréthane élastomère, non cellulaire ou microcellulaire, qui peut être identique au ou différent du matériau de peau fluide utilisé pour ladite première couche (33), étant appliqué contre un côté arrière de ladite première couche (33) et contre au moins un côté de l'insert (6) de sorte que l'insert est fixé de manière adhésive à ladite matière plastique.

2. Procédé selon la revendication 1, **caractérisé en ce que** ladite couche de support structurale (4) est unie au côté arrière de la peau (2) fabriquée par l'intermédiaire d'une couche de mousse intermédiaire (5).

3. Procédé selon la revendication 1 ou 2, **caractérisé en ce que** l'insert (6) est positionné sur ladite première couche (33) de matériau de peau fluide avant que cette couche (33) de matériau de peau fluide ait complètement durci de manière à faire adhérer l'insert (6) à cette couche (33).

4. Procédé selon l'une quelconque des revendications 1 à 3, **caractérisé en ce que** ledit insert préfabriqué (6) est un circuit électronique ou une pièce pour celui-ci.

5. Procédé selon la revendication 4, **caractérisé en ce que** ledit insert préfabriqué (6) comprend un élément sélectionné dans le groupe consistant en une platine électronique (36), un câblage électrique, un bouton-poussoir électrique (35), un code électronique lisible, un détecteur, une puce, des éléments micro-électroniques, des éléments d'intelligence intégrée, des éléments de technologie de carte à puce intelligente, des fibres conductrices, des interfaces et des antennes, des éléments de système de détection de véhicule automobile ou une combinaison de ces éléments.

6. Procédé selon la revendication 5, **caractérisé en ce que** ledit insert préfabriqué (6) comprend une platine électronique (36) flexible.

7. Procédé selon l'une quelconque des revendications 1 à 6, **caractérisé en ce que** ledit matériau de peau fluide est appliqué par pulvérisation contre la surface (8) du moule.

8. Procédé selon l'une quelconque des revendications 1 à 7, **caractérisé en ce que** ledit matériau de peau fluide est appliqué contre la surface (8) du moule en utilisant un moule fermé et en remplissant ce moule fermé avec ledit matériau de peau fluide soit par un procédé de versage soit par un procédé de moulage par injection, plus particulièrement par un processus de moulage par injection-réaction.

9. Procédé selon l'une quelconque des revendications 1 à 8, **caractérisé en ce que** ladite peau (2) est réalisée en appliquant tout d'abord une couche de finition contre ladite surface du moule, en particulier une peinture appliquée dans le moule, et ensuite ledit matériau de peau fluide.

10. Procédé selon l'une quelconque des revendications 1 à 9, **caractérisé en ce que** ladite peau (2) flexible a une épaisseur moyenne de l'ordre de 0,1 à 3 mm.

11. Procédé selon l'une quelconque des revendications 1 à 11, **caractérisé en ce que** ledit autre matériau de peau fluide est appliqué contre la face arrière (7) de l'insert (6).
